# EUROPÄISCHE PATENTSCHRIFT

(11) **EP 3 470 287 B1**
(45) Veröffentlichungstag und Bekanntmachung des Hinweises auf die Patenterteilung: **22.09.2021**
(21) Anmeldenummer: 18200186.7
(22) Anmeldetag: 12.10.2018
(51) Int. Cl.: B61C 7/04, B61D 27/00

(54) **VORRICHTUNG ZUR KLIMATISIERUNG EINES SCHIENENFAHRZEUGES**
DEVICE FOR THE AIR CONDITIONING OF A RAILWAY VEHICLE
DISPOSITIF DE CLIMATISATION D'UN VÉHICULE FERROVIAIRE

(30) Priorität: 12.10.2017 DE 102017123743
(43) Veröffentlichungstag der Anmeldung: 17.04.2019
(73) Patentinhaber: Bombardier Transportation GmbH, 10785 Berlin (DE)
(72) Erfinder: Buschbeck, Jan, 13509 Berlin (DE)
(74) Vertreter: Zimmermann & Partner Patentanwälte mbB

(56) Entgegenhaltungen:
- EP-A1- 2 946 981
- WO-A1-2016/023682
- DE-A1-102010 018 906
- DE-A1-102013 216 068
- DE-A1-102014 215 574
- KR-A- 20170 033 520
- KR-B1- 100 472 554

## Beschreibung

Die Erfindung betrifft ein elektrisch angetriebenes Schienenfahrzeug mit einer auf dem Fahrzeug installierten, internen Energiequelle zur Energieversorgung des Antriebs auf Streckenabschnitten ohne externe Energiequelle sowie einer Schnittstelle zur Energieversorgung des Fahrzeugs auf Streckenabschnitten mit externer Energiequelle.

Zur Energieversorgung des Antriebs auf elektrifizierten Strecken können Schienenfahrzeuge mit einer Schnittstelle ausgerüstet sein, beispielsweise einem Stromabnehmer. Um Schienenfahrzeuge auf nicht elektrifizierten Strecken mit elektrischer Energie zu versorgen, sind diese beispielsweise mit Dieselgeneratoren, Brennstoffzellen oder Batterien ausgestattet. Insbesondere bei batteriebetriebenen Schienenfahrzeugen ist der Energieverbrauch maßgeblich für die Reichweite des Fahrzeuges. Aufgrund der im Verhältnis zu fossilen Brennstoffen geringen erreichbaren Energiedichte in Akkumulatoren ist es eine technische Herausforderung, eine für den Alltagsgebrauch eines Fahrzeuges angemessene Reichweite zu erhalten.

Die KR20170033520 illustriert ein Beispiel für ein batteriebetriebenes Schienenfahrzeug, das für elektrifizierte Strecken mit einem Stromabnehmer ausgestattet ist, über den der Antrieb des Schienenfahrzeuges mit elektrischer Energie versorgt werden kann. Zugleich dient der Stromabnehmer dazu, die auf dem Fahrzeug befindlichen Batterien zu laden.

Neben dem Energieverbrauch des Antriebes kann der Energieverbrauch der Nebenaggregate die Reichweite des Fahrzeuges maßgeblich beeinflussen. Zu den Nebenaggregaten mit dem größten Energieverbrauch gehören Vorrichtungen zur Klimatisierung.

Die WO201623682A1 offenbart ein Schienenfahrzeug mit einer Reibbremse, die mit einem Wärmetauscher versehen ist, so dass die bei einem Bremsvorgang in einem Reibpartner anfallende Bremswärme über ein Wärmeträger-Fluid an einen weiteren Wärmetauscher übertragbar ist. Die bei einem Bremsvorgang aufgenommene Wärme kann somit der Klimaanlage des Schienenfahrzeuges zugeführt und für die Beheizung des Fahrzeuges verwendet werden.

Die DE4416107A beschreibt ein Verfahren, in dem während eines Bremsvorgangs eine generatorische Rückspeisung der Bremsenergie in die Klimaanlage erfolgt, indem während einer Bremsphase ein Heizwiderstand oder der Verdichter der Klimaanlage eingeschaltet werden.

In der DE3839271A1 wird vorgeschlagen, während eines generatorischen Betriebes des Fahrmotors einen Teil der elektrischen Energie einem elektrisch beheizbaren Wärmespeicher zuzuführen, um die erzeugte Wärme anschließen für die Temperierung des Fahrgastraumes zu verwenden.

Die EP 2 946 981 A1 offenbart Möglichkeiten der Energieeinsparung mittels einer zentralen Ansteuerung von Energieverbrauchern und Energiespeichern eines Fahrzeuges.

Die DE 10 2010 018906 A1 schlägt die Verwendung einer dezentralen Klimatisierungseinrichtung vor, die durch extern zugeführte elektrische Energie versorgbar ist, wobei ein Wärmespeicher Verwendung finden kann.

Die in den bekannten Verfahren beschriebene Rückgewinnung von Bremsenergie und deren Verwendung für Hilfsaggregate hilft, den Energieverbrauch eines Schienenfahrzeuges maßgeblich zu verbessern. Bei batteriebetriebenen Fahrzeugen kann die zurückgewonnene Energie zudem in Akkumulatoren gespeichert werden.

Die Rückgewinnung der Bremsenenergie ist jedoch auf die Bremsvorgänge beschränkt und somit von der Anzahl der Haltevorgänge abhängig. Es wird zwar auch eine Speicherung der zurückgewonnenen Energie vorgeschlagen. Diese erfordert jedoch zusätzliche technische Mittel, wie elektrisch beheizbare Wärmespeicher.

Der Erfindung liegt die Aufgabe zu Grunde, ein Schienenfahrzeug der eingangs genannten Art mit einer Klimatisierungseinrichtung bereitzustellen, wobei der Verbrauch der auf dem Fahrzeug erzeugten oder gespeicherten elektrischen Energie möglichst geringgehalten werden soll. Diese Aufgabe wird erfindungsgemäß mit einer Vorrichtung nach Anspruch 1 gelöst. Weiterhin wird die Aufgabe mit einem Verfahren nach Anspruch 10 gelöst. Vorteilhafte Ausgestaltungen der Erfindung sind in den Unteransprüchen enthalten.

Erfindungsgemäß ist vorgesehen, dass das Schienenfahrzeug eine Klimatisierungseinrichtung aufweist, wobei die Klimatisierungseinrichtung eine Heizvorrichtung zum Erwärmen und/oder eine Kühlvorrichtung zum Kühlen eines Fahrgastraums umfasst und mit einem Wärmespeicher versehen ist, der wärmeübertragend mit der Heiz- und/oder Kühlvorrichtung verbindbar angeordnet ist. Mit der wärmeübertragenden Anbindung des Wärmespeichers kann die von der Klimatisierungseinrichtung erzeugte Wärme oder Kälte zumindest teilweise gespeichert werden. Auf nicht elektrifizierten Strecken ist es somit möglich, den Fahrgastraum weiterhin zu klimatisieren, wobei die Heiz-, oder Kühlvorrichtung abgeschaltet oder mit geringerer Leistung betrieben werden können.

Im Rahmen dieser Anmeldung wird neben dem Passagierraum auch der Zugführerraum als ein Fahrgastraum angesehen.

Der Wärmespeicher kann die Trägheit der Klimatisierungseinrichtung bzw. des Systems aus Klimatisierungseinrichtung und Fahrgastraum erhöhen. Gelangt von der Klimatisierungseinrichtung erzeugte Wärme oder Kälte zunächst in den Wärmespeicher, speichert dieser die Wärme bzw. die Kälte und der den Wärmespeicher in Richtung des Fahrgastraums verlassende Luftstrom ist entsprechend abgekühlt bzw. erwärmt. Vorzugsweise kann dieser Effekt bei der Regulierung der Klimatisierungseinrichtung einbezogen werden, um eine ausreichende Beheizung bzw. Kühlung des Fahrgastraums zu erreichen.

Indem der Wärmespeicher unmittelbar durch die Klimatisierungseinrichtung erwärmt oder abgekühlt wird, wird auf weitere technische Mittel wie Heizungen oder Wärmetauscher verzichtet. Die Klimatisierungseinrichtung kann folglich bis auf den hinzugefügten Wärmespeicher ein Standardsystem einer Schienenfahrzeugflotte sein.

In einer bevorzugten Variante der Erfindung ist der Wärmesp eicher ein Latentwärmespeicher, um die thermische Energie verlustarm, wiederholbar und über längere Zeit speichern zu können. Als Speichermedium können Phasenwechselmaterialien verwendet werden, um die über die spezifische Wärmekapazität hinausgehende Schmelz-, Absorptions- oder Lösungswärme nutzen zu können.

Erfindungsgemäß ist die Heiz- und/oder Kühlvorrichtung ausgebildet, einen dem Fahrgastraum zuführbaren Luftstroms zu erwärmen oder zu kühlen, wobei der Wärmespeicher wärmeübertragend mit dem Luftstrom verbindbar angeordnet ist. Der Wärmespeicher kann beispielsweise über in dem Luftstrom angeordnete Temperaturleitbleche oder über einen im Luftstrom angeordneten Wärmetauscher wärmeübertragend mit dem Luftstrom verbunden sein. Für einen einfachen Aufbau der erfindungsgemäßen Klimatisierungseinrichtung kann der Wärmespeicher wenigstens abschnittsweise unmittelbar in dem Luftstrom angeordnet sein.

Für einen gezielten, effizienten Wärmetransport bzw. für eine effiziente Kühlung kann die Klimatisierungseinrichtung eine Luftführung aufweisen, die von der Heiz- und/oder Kühlvorrichtung zum Fahrgastraum führt. Die Luftführung kann bevorzugt wenigstens abschnittsweise von wenigstens einer Wand begrenzt sein. Vorzugsweise ist wenigstens ein Luftführungskanal vorgesehen, der die von der Heiz- und/oder Kühlvorrichtung behandelte Luft in den Fahrgastraum leitet.

In einer bevorzugten Variante der Erfindung kann der Wärmespeicher wärmeübertragend mit der Luftführung verbunden sein. Für einen effizienten Wärmeübergang kann der Wärmespeicher an oder in der Luftführung angeordnet sein. Der Wärmespeicher kann an einer als Kanal ausgestalteten Luftführung befestigt sein. Der Luftstrom kann zudem in einer weiteren vorteilhaften Variante durch den Wärmespeicher hindurchleitbar ein. Der Wärmespeicher kann einen Teil des Kanals bilden.

Um die Mischung erwärmter und/oder gekühlter Luft mit von der Klimatisierungseinrichtung aus der Umgebung des Fahrzeugs oder aus dem Fahrgastraum entnommener Luft besser steuern zu können, kann die Luftführung einen ersten und einen zweiten Luftkanal umfassen, wobei der Latentwärmespeicher an und/oder in dem ersten Luftkanal angeordnet sein kann und/oder wärmeleitend mit dem ersten Luftkanal verbunden sein kann. Der erste Luftkanal kann als Bypass ausgestaltet sein, in den ein Teil der von der Klimatisierungseinrichtung in den Fahrgastraum geleiteten Luft abgezweigt werden kann.

Um den Ladezustand des Wärmespeichers sowohl im Heizbetrieb als auch im Kühlbetrieb und auch bei einer Mischung der für den Fahrgastraum vorgesehen Luft mit Umgebungsluft aufrecht zu erhalten, kann die Heizvorrichtung und/oder Kühlvorrichtung unmittelbar mit dem ersten Luftkanal verbunden sein, so dass die von der Heizvorrichtung und/oder Kühlvorrichtung temperierte Luft ohne die Zumischung weiterer Luft zum Wärmespeicher gelangen kann.

In einer zweckmäßigen Weiterbildung kann eine Verschließeinrichtung zum Verschließen des ersten Luftkanals und/oder eine weitere Verschließeinrichtung zum Verschließen des zweiten Luftkanals vorgesehen sein. Es kann eine erste Verschließeinrichtung zum Verschließen des Eingangs des ersten Luftkanals sowie eine zweite Verschließeinrichtung zum Verschließen des Ausgangs des ersten Luftkanals vorgesehen sein. Entsprechend kann eine dritte Verschließeinrichtung zum Verschließen des Eingangs des zweiten Luftkanals sowie eine vierte Verschließeinrichtung zum Verschließen des Ausgangs des zweiten Luftkanals vorgesehen sein. Durch das Verschließen des ersten Luftkanals kann der Wärmespeicher wahlweise in die Luftführung der Klimatisierungseinrichtung eingebunden oder von dieser abgetrennt werden. Durch Verschließen des zweiten Luftkanals kann die Heiz- oder Kühlleistung der Klimatisierungseinrichtung ganz auf den Wärmespeicher gerichtet werden. Die erste Verschließeinrichtung kann bevorzugt an einem der Heiz- oder Kühlvorrichtung zugewandtem Ende des ersten Luftkanals angeordnet sein, die dritte Verschließeinrichtung einem der Heiz- oder Kühlvorrichtung zugewandtem Ende des zweiten Luftkanals. Ist bei tiefen Temperaturen, zum Beispiel nach einer längeren Betriebspause des Fahrzeuges, eine schnellstmögliche Erwärmung des Fahrgastraumes erwünscht, kann der Wärmespeicher von der Luftführung abgetrennt werden, um ausschließlich den Fahrgastraum zu erwärmen, ohne dass durch die Klimatisierungseinrichtung erzeugte Wärme von dem Wärmespeicher aufgenommen wird. Gleichermaßen kann ein durch die Klimatisierungseinrichtung gekühlter Luftstrom in den Fahrgastraum geleitet werden, ohne dass der an dem abgetrennten ersten Luftkanal wirkende Wärmespeicher seine Wärme an den Luftstrom abgibt.

Die zweite Verschließeinrichtung kann an einem dem Fahrgastraum zugewandten Ende des ersten Luftkanals, die vierte Verschließeinrichtung an einem dem Fahrgastraum zugewandten Ende des zweiten Luftkanals angeordnet sein. Somit kann bei Bedarf der Fahrgastraum von der Luftführung abgetrennt werden, um mit der Heiz- oder Kühlvorrichtung, insbesondere bei Befahren einer elektrifizierten Strecke, die Temperatur des Wärmespeichers zu verändern bzw. den Wärmespeicher aufzuladen, ohne die Temperatur des Fahrgastraums zu beeinflussen. Der erste und der zweite Luftkanal können gemäß einer bevorzugten Ausführung der Erfindung einen Kreislauf bilden, der mit der Heiz- oder Kühlvorrichtung verbunden und zum Fahrgastraum hin geschlossen ist, um den Wärmespeicher aufzuladen.

Zur Steuerung der Abkühlung oder Erwärmung des in den Fahrgastraum geleiteten Luftstroms kann die Klimatisierungseinrichtung eine Steuereinrichtung aufweisen. Die Steuereinrichtung kann dazu ausgebildet sein, die Leistung der Klimatisierungseinrichtung Einbezug der Wärmeabgabe oder Wärmeaufnahme des Wärmespeichers entsprechend einem Sollwert einzustellen. Die Leistung der Klimaanlage bestimmt sich aus der Menge der erzeugten oder abtransportierten Wärme. Die Steuereinrichtung kann einen im Fahrgastraum angeordneten ersten Temperatursensor umfassen, um die Temperatur des aus der Klimatisierungseinrichtung in den Fahrgastraum geleiteten nach Bedarf anzupassen oder die Differenz zwischen der Temperatur des Luftstroms und der Temperatur des Fahrgastraums für einen verbesserten Komfort der Fahrgäste gering zu halten. Des Weiteren kann die Steuereinrichtung einen zweiten Temperatursensor umfassen, der die Umgebungstemperatur des Schienenfahrzeuges erfasst, und/oder einen dritten Temperatursensor, der die Temperatur des Luftstroms in der Luftführung erfasst.

Zur Bestimmung des Ladezustandes des Wärmespeichers kann ein vierter Temperatursensor vorgesehen sein, der die Temperatur des Wärmespeichers bzw. des Wärmespeichermediums des Wärmespeichers erfasst. Um die Erwärmung des Luftstroms durch den Wärmespeicher unmittelbar erfassen zu können, kann zudem die Temperatur des Luftstroms, der den Wärmespeicher passiert hat, gemessen werden. Dazu kann in der Luftführung unmittelbar hinter dem Wärmespeicher ein fünfter Temperatursensor angeordnet sein.

Gemäß einer Weiterbildung der Erfindung kann die erste Verschließeinrichtung durch die Steuereinrichtung ansteuerbar sein. Insbesondere kann die erste Verschließeinrichtung durch die Steuereinrichtung abhängig von einer gemessenen Temperatur in dem Fahrgastraum, in dem Wärmespeicher, in der Luftführung und/oder in der Umgebung des Schienenfahrzeuges betätigbar sein. Der Wärmespeicher kann somit abhängig von den Temperaturniveaus der Luft in der Klimatisierungseinrichtung und/oder der in bzw. aus der Klimatisierungseinrichtung geleiteten Luft in die Luftführung integriert oder von dieser abgetrennt werden. Vorzugsweise ist durch die Steuereinrichtung die Soll-Temperatur und/oder die Ist-Temperatur des Fahrgastraums erfassbar und der erste Luftkanal entsprechend abhängig von der Soll-Temperatur und/oder der Ist-Temperatur des Fahrgastraums verschließbar ausgestaltet. Entsprechend können auch die zweite, dritte und/oder vierte Verschließeinrichtung durch die Steuereinrichtung ansteuerbar sein.

Das Schienenfahrzeug kann eine oder verschiedene Arten von elektrischen Energiequellen aufweisen, wie Dieselgeneratoren, Brennstoffzellen, Kondensatoren oder Batterien. Es hat sich gezeigt, dass eine erfindungsgemäße Klimatisierungseinrichtung insbesondere dann vorteilhaft ist, wenn das Schienenfahrzeug zur Energieversorgung seines Antriebes und von Nebenaggregaten mit einem Akkumulator oder Kondensatoren versehen ist.

In einer bevorzugten Ausgestaltung der Erfindung ist vorgesehen, dass die Steuereinrichtung eine Auswerteeinheit umfasst, durch welche ein erster Betriebszustand, in welchem die Energieversorgung des Schienenfahrzeuges über die externe Energiequelle erfolgt, und ein zweiter Betriebszustand, in welchem die Energieversorgung über die interne Energiequelle erfolgt, erfassbar sind. Vorzugsweise ist die Klimatisierungseinrichtung abhängig von dem jeweiligen Betriebszustand des Schienenfahrzeuges einstellbar.

In einem erfindungsgemäßen Verfahren zur Klimatisierung eines Schienenfahrzeuges mit einer erfindungsgemäßen Klimatisierungseinrichtung ist ein gleichzeitiges Beheizen oder Kühlen des Fahrgastraums und des Wärmespeichers vorgesehen. Das gleichzeitige Beheizen oder Kühlen von Fahrgastraum und Wärmespeicher erfolgt insbesondere im erstem Betriebszustand, in welchem das Schienenfahrzeug über die externe Energiequelle mit Energie versorgt wird.

In dem ersten Betriebszustand, d.h. bei einer Energieversorgung über eine externe Energiequelle, kann näherungsweise davon ausgegangen werden, dass die elektrische Energie in unbegrenztem Umfang vorhanden ist. Solange der erste Betriebszustand anhält, also solange das Schienenfahrzeug auf einem elektrifizierten Streckenabschnitt fährt, können somit die Energiespeicher des Fahrzeuges aufgefüllt werden.

In einer Weiterbildung des erfindungsgemäßen Verfahrens kann die Steuereinrichtung den Betriebszustand des Schienenfahrzeuges erfassen, d.h. ob sich das Schienenfahrzeug in dem ersten oder in dem zweiten Betriebszustand befindet. Erfasst die Steuereinrichtung den ersten Betriebszustand und befindet sich die Klimatisierungseinrichtung im Heizbetrieb, d.h. die durch die Steuereinrichtung erfasste Temperatur des Fahrgastraums befindet sich unter einem Sollwert, wird die erste Verschließeinrichtung geöffnet und der Wärmespeicher durch die Heizvorrichtung beheizt. Erfasst die Steuereinrichtung den ersten Betriebszustand und befindet sich die Klimatisierungseinrichtung im Kühlbetrieb, d.h. die durch die Steuereinrichtung erfasste Temperatur des Fahrgastraums befindet sich über einem Sollwert, wird die erste Verschließeinrichtung geöffnet und der Wärmespeicher durch die Kühlvorrichtung gekühlt. Erfasst die Steuereinrichtung den zweiten Betriebszustand, in welchem die Energieversorgung über die interne Energiequelle erfolgt, wird der Betrieb der Heiz- und/oder Kühlvorrichtung eingeschränkt oder eingestellt.

Bei geöffneter Verschließeinrichtung kann die Temperatur des Wärmespeichers durch die Klimatisierungseinrichtung verändert werden bzw. der Wärmespeicher kann wenigstens einen Anteil der Wärme- bzw. Kälteleistung der Klimatisierungseinrichtung absorbieren. Bei geöffneter Verschließeinrichtung ist die maximale Leistung der Klimatisierungseinrichtung folglich reduziert.

Ein zur Erwärmung des Wärmespeichers durch den Wärmespeicher geleiteter Luftstrom kann anschließend dem Fahrgastraum zugeführt werden, wobei die Steuereinrichtung bei der Bestimmung und/oder der Einstellung der Temperatur des dem Fahrgastraum zugeführten Luftgemisches den aus dem Ausgang des ersten Luftkanals austretenden Luftstrom mit einbezieht. Um bei vollständig entladenem Wärmespeicher dem Fahrgastraum nicht unnötig abgekühlte Luft zuzuführen, ist erfindungsgemäß ein Rückführkanal vorgesehen, durch den der für die Aufwärmung des Wärmespeichers verwendeten Luftstrom zurück in die Wärmetauscherkammer bzw. zurück zur Heiz- und/oder Kühlvorrichtung leitbar ist. Entsprechend kann in dem erfindungsgemäßen Verfahren vorgesehen sein, dass ein für das Temperieren des Wärmespeichers verwendeter Luftstrom zurück zur Heiz- oder Kühlvorrichtung geleitet wird.

Des Weiteren kann das erfindungsgemäße Verfahren eine Prüfung der Differenz zwischen dem Soll- und dem Istwert der Temperatur des Fahrgastraums umfassen. Stellt die Steuereinrichtung eine Temperaturdifferenz fest, die größer 10 °C, vorzugsweise größer 8 °C, äußerst vorzugsweise größer 5 °C ist, wird die erste Verschließeinrichtung geschlossen oder geschlossen gehalten. Somit kann der Fahrgastraum effektiv gekühlt oder geheizt werden, bis eine Komfortemperatur erreicht ist. Wird die vorgegebene Differenz zwischen dem Soll- und dem Istwert der Temperatur des Fahrgastraums anschließend unterschritten, kann die Steuereinrichtung nach Erfassung der neuen, kleineren Temperaturdifferenz eine Öffnung der ersten Verschließeinrichtung bewirken. Um ein günstiges Regelungsverhalten zu erreichen, kann die vorgegebene Differenz zwischen dem Soll- und dem Istwert der Temperatur des Fahrgastraums für ansteigende Temperaturen und für abfallende Temperaturen jeweils unterschiedlich gewählt sein.

Ein entsprechendes Verfahren zur Klimatisierung eines Schienenfahrzeuges kann entsprechend die folgenden Schritte umfassen: Klimatisieren des Fahrgastraums durch die Heiz- und/oder Kühlvorrichtung bis zum Erreichen einer ersten vorgegebenen Übergangstemperatur, anschließend gleichzeitiges Klimatisieren des Fahrgastraums und des Wärmespeichers durch die Heiz- und/oder Kühlvorrichtung.

Das gleichzeitige Beheizen bzw. Kühlen des Fahrgastraums und des Wärmespeichers kann bevorzugt derart durch die Steuereinrichtung gesteuert werden, dass im ersten Betriebszustand des Schienenfahrzeuges, d.h. bei Vorliegen einer externen Stromversorgung, und bei gleichzeitig entladenem Wärmespeicher der Klimatisierungseinrichtung mehr Energie zur Verfügung gestellt wird oder die Leistung der Klimatisierungseinrichtung erhöht wird.

Nach Erfassen des zweiten Betriebszustanden, in welchem die Energieversorgung über die interne Energiequelle erfolgt, kann gemäß einem weiteren Verfahrensschritt eine Reduzierung der Heiz- oder Kühlleistung und/oder ein Abschalten der Heiz- und/oder Kühlvorrichtung erfolgen. Anschließend kann die Klimatisierung des Fahrgastraums teilweise oder allein durch den Wärmespeicher erfolgen. Entsprechend kann nach Erfassen eines ersten Betriebszustandes, in welchem die Energieversorgung des Schienenfahrzeuges über die externe Energiequelle erfolgt, die Heiz- und/oder Kühlvorrichtung eingeschaltet werden oder die Heiz- oder Kühlleistung gesteigert werden.

Die Erfassung des ersten und/oder des zweiten Betriebszustandes kann über die an einer Schnittstelle zur Energieversorgung, beispielsweise einem Stromabnehmer des Schienenfahrzeuges anliegende Spannung, die Position des Schienenfahrzeuges oder die Position eines ausfahrbaren Stromabnehmers erfolgen. Wird beispielsweise eine Betriebsspannung im Fahrzeug gemessen, die der Spannung der externen Stromversorgung entspricht, oder befindet sich das Fahrzeug auf einem elektrifizierten Streckenabschnitt, oder ein Stromabnehmer befindet sich in einer ausgefahrenen Position, kann die Steuereinrichtung den ersten Betriebszustand identifizieren. In einer Weiterbildung der Erfindung kann zudem eine Kombination dieser Parameter herangezogen werden, um den Betriebszustand des Schienenfahrzeuges zu bestimmen. Sind einer oder mehrere der zuvor genannten Zustände nicht vorhanden, kann die Steuereinrichtung entsprechend den zweiten Betriebszustand identifizieren.

### Figurenbeschreibung

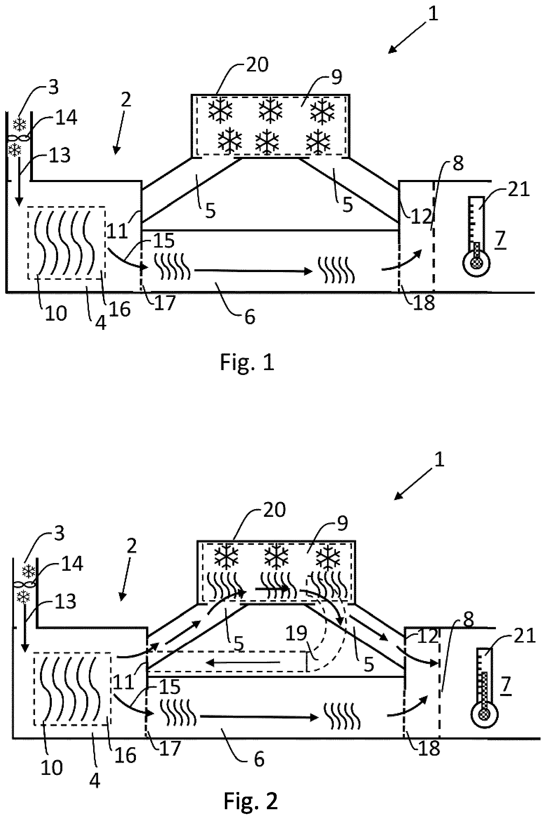

Die beiliegenden Zeichnungen veranschaulichen erfindungsgemäße Ausführungsformen und dienen zusammen mit der Beschreibung der Erläuterung der Prinzipien der Erfindung. Im Folgenden wird unter Bezugnahme auf die Figuren 1 bis 4 ein bevorzugtes Ausführungsbeispiel der erfindungsgemäßen Klimatisierungseinrichtung beschrieben.

Es zeigen:
- Fig. 1: eine schematische Darstellung einer erfindungsgemäßen Klimatisierungseinrichtung in einem ersten Betriebsmodus mit geschlossenem ersten Luftkanal.
- Fig. 2: eine schematische Darstellung einer der Klimatisierungseinrichtung aus Fig. 1 in einem zweiten Betriebsmodus mit geöffnetem ersten Luftkanal.
- Fig. 3: eine schematische Darstellung einer der Klimatisierungseinrichtung aus Fig. 1 und 2 in einem dritten Betriebsmodus mit geöffnetem ersten Luftkanal.
- Fig. 4: eine schematische Darstellung einer der Klimatisierungseinrichtung aus den Fig. 1 bis 3 in einem vierten Betriebsmodus mit geöffnetem ersten Luftkanal und geschlossenem zweiten Luftkanal.

Die Figuren 1 bis 4 zeigen verschiedene Betriebszustände einer Klimatisierungseinrichtung 1 in einem erfindungsgemäßen Schienenfahrzeug. Die Klimatisierungseinrichtung 1 befindet sich jeweils in einem Winter- bzw. Heizbetrieb. Die Klimatisierungseinrichtung 1 kann entsprechend auch in einem Sommer- bzw. Kühlbetrieb betrieben werden, wobei entsprechend die im Folgenden beschriebenen Heizfunktionen durch Kühlfunktionen zu ersetzen sind.

In Fig. 1 ist eine erfindungsgemäße Klimatisierungseinrichtung 1 in einem ersten Betriebsmodus gezeigt, in welchem der Fahrgastraum 7 beheizt wird. Die Klimatisierungseinrichtung 1 umfasst eine Luftführung 2. Zu der Luftführung 2 gehören eine Luftzuführung 3, eine Wärmetauscherkammer 4, ein erster Luftkanal 5, ein zweiter Luftkanal 6 sowie ein in einen Fahrgastraum 7 führender Luftausgang 8. Im Bereich des ersten Luftkanals 5 ist ein Wärmespeicher 9 angeordnet, der über den ersten Luftkanal 5 zugeführte Wärmeenergie speichert. Der erste Luftkanal 5 umfasst dazu eine Wärmespeicherkammer 20, in welcher der Wärmespeicher 9 angeordnet ist. Der Wärmespeicher 9 kann des Weiteren zum "Speichern" von Kälte genutzt werden, d.h. der Wärmespeicher 9 kann über den Luftkanal 5 abgekühlt werden.

In der Wärmetauscherkammer 4 ist eine Heizvorrichtung 10 angeordnet, die ausgebildet ist, von der Luftzuführung 3 eingeleitete Luft zu erwärmen. Anstelle oder parallel zu der Heizvorrichtung 10 kann eine Kühlvorrichtung vorgesehen sein, z.B. eine Kältemaschine, die ausgestaltet ist, der von der Luftzuführung 3 eingeleiteten Luft Wärme zu entziehen.

Um die in der Wärmetauscherkammer 4 temperierte Luft auf direktem Wege dem Fahrgastraum 7 zuzuführen, ist am Eingang des ersten Luftkanals 5 eine erste Verschließeinrichtung 11 vorgesehen. In dem in Fig. 1 gezeigten Betriebsmodus ist die Verschließeinrichtung 11 verschlossen, d.h. die temperierte Luft gelangt nicht zu dem Wärmespeicher 9. Gleichermaßen ist am Ausgang des ersten Luftkanals 5 eine zweite Verschließeinrichtung 12 vorgesehen, welche die Verbindung des ersten Luftkanals 5 zum Fahrgastraum 7 unterbricht.

Des Weiteren sind auch an dem Eingang des zweiten Luftkanals 6 eine dritte Verschließeinrichtung 17 sowie an dem Ausgang des zweiten Luftkanals 6 eine vierte Verschließeinrichtung 18 angeordnet. Die dritte Verschließeinrichtung 17 und die vierte Verschließeinrichtung 18 dienen dazu, in einem weiteren Betriebsmodus der Klimatisierungseinrichtung 1 den zweiten Luftkanal 6 zu verschließen und die Luft allein durch den ersten Luftkanal 5 unter Einbeziehung des Wärmespeichers 9 dem Fahrgastraum 7 zuzuführen.

Durch eine hier nicht gezeigte Steuereinrichtung zur Steuerung der Klimatisierungseinrichtung 1 erfolgt eine Prüfung der Differenz zwischen einem vorgewählten Sollwert und dem Istwert der Temperatur des Fahrgastraums 7. Für die Erfassung der Ist-Temperatur in dem Fahrgastraum 7 ist die Steuereinrichtung mit einem Temperatursensor 21 ausgestattet, der symbolisch als Thermometer dargestellt ist.

Stellt die Steuereinrichtung eine Temperaturdifferenz zwischen dem Soll- und dem Istwert fest, die z.B. größer 5 °C ist, werden die erste Verschließeinrichtung 11 und die zweite Verschließeinrichtung 12 geschlossen oder geschlossen gehalten. Stellt die Steuereinrichtung z.B: einem Sollwert von 20°C einen Istwert fest, der kleiner als 15°C beträgt, wird der in Fig. 1 gezeigte Betriebsmodus hergestellt. Somit kann der Fahrgastraum 7 effektiv gekühlt oder geheizt werden, bis die vorgegebene Temperaturdifferenz unterschritten wurde oder eine Komfortemperatur erreicht ist.

In dem in Fig. 1 gezeigten ersten Betriebsmodus wird die durch die Luftzuführung 3 in einer Strömungsrichtung 13 eingeleitete Luft zunächst über einen Ventilator 14 in die Wärmetauscherkammer 4 gefördert, wo die Heizvorrichtung 10 über einen hier nicht gezeigten Wärmetauscher den zugeführten Luftstrom erwärmt. Anschließend gelangt der Luftstrom in einer Strömungsrichtung 15 durch den zweiten Luftkanal 6 und durch den Luftausgang 8 in den Fahrgastraum 7. Der Wärmespeicher 9 wird folglich vollständig überbrückt, die erwärmte Luft gelangt auf direktem Wege von der Heizvorrichtung 10 zum Fahrgastraum 7.

Liegen die Temperaturen im Fahrgastraum 7 über einer vorgewählten Soll-Temperatur, können die Verschließeinrichtungen 11, 12 auf ähnliche Weise angesteuert werden. Dazu wird die Klimatisierungseinrichtung 1 im Sommerbetrieb bzw. in einem Kühlmodus betrieben. Um den durch die Luftzuführung 3 zugeführte Luft zu kühlen, ist eine Kühlvorrichtung 16 vorgesehen, die parallel zur Heizvorrichtung 10 angeordnet ist. Wird durch die Steuereinrichtung bei einer Soll-Temperatur im Fahrgastraum 7 von 20°C eine Ist-Temperatur von mehr als 25° erfasst, werden entsprechend die Verschließeinrichtungen 11, 12 verschlossen und die durch die Kühlvorrichtung 16 gekühlte Luft unmittelbar dem Fahrgastraum 7 zugeführt.

Nach Erfassen eines ersten Betriebszustandes des Schienenfahrzeugs, in welchem die Energieversorgung des Schienenfahrzeuges über die externe Energiequelle erfolgt, wird je nach Temperatur des Fahrgastraumes 7 die Heizvorrichtung 10 oder Kühlvorrichtung 16 eingeschaltet. Ist der Wärmespeicher 9 bereits wenigstens teilweise entladen, wird die Heiz- oder Kühlleistung gesteigert, um die durch den Wärmespeicher 9 bewirkte Wärmeauf- oder abgabe zu kompensieren.

Fig. 2 zeigt die Klimatisierungseinrichtung 1 in einem zweiten Betriebsmodus, in dem die Temperatur des Fahrgastraums 7 gegenüber der Fig. 1 erhöht ist. Nachdem die Temperatur des Fahrgastraums 7 die vorgegebene Temperaturdifferenz unterschritten hat, d.h. die Temperatur im Fahrgastraum 7 beispielsweise mehr 15°C beträgt, kann ein Teil der zur Verfügung stehenden Wärmeenergie genutzt werden, um den Wärmespeicher 9 aufzuladen. Erkennt die Steuereinrichtung die Unterschreitung der Temperaturdifferenz, werden daher die erste Verschließeinrichtung 11 und die zweite Verschließeinrichtung 12 geöffnet. Die in der Heizvorrichtung 10 erwärmte Luft kann nun durch den ersten Luftkanal 5 den Wärmespeicher 9 passieren und einen Teil der Wärme an den Wärmespeicher 9 abgeben, wobei diese Wärme zunächst nicht mehr für den Fahrgastraum 7 zur Verfügung steht.

Die durch den Wärmespeicher 9 geleitete Luft kann anschließend weiterhin dem Fahrgastraum 7 zugeführt werden, wobei die Steuereinrichtung bei der Bestimmung der Temperatur des dem Fahrgastraum 7 zugeführten Luftgemisches den aus dem Ausgang des ersten Luftkanals 5 austretenden Luftstrom mit einbezieht. Um bei vollständig entladenem Wärmespeicher 9 dem Fahrgastraum 7 nicht unnötig abgekühlte Luft zuzuführen, kann des Weiteren ein Rückführkanal 19 vorgesehen sein, der ein für die Aufwärmung des Wärmespeichers 9 verwendeten Luftstrom wenigstens teilweise zurück in die Wärmetauscherkammer 4 leitet.

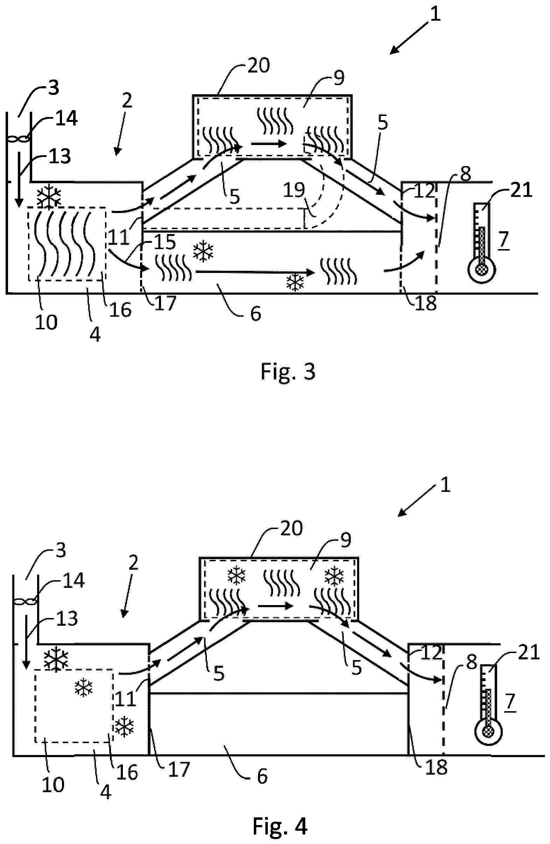

In Fig. 3 ist ein dritter Betriebsmodus der Klimatisierungseinrichtung 1 gezeigt, in welchem der Wärmespeicher 9 eine vorbestimmte Ladetemperatur erreicht hat, bei welcher keine zusätzliche Wärme gespeichert wird. Dem Wärmespeicher 9 wird lediglich weiterhin erwärmte Luft zugeführt, um den Ladezustand aufrecht zu erhalten. Die durch den Wärmespeicher 9 geleitete Luft kann anschließend dem Fahrgastraum 7 zugeführt werden, wobei die Steuereinrichtung bei der Bestimmung der Temperatur des dem Fahrgastraum 7 zugeführten Luftgemisches den aus dem Ausgang des ersten Luftkanals 5 austretenden Luftstrom mit einbezieht.

Um die Temperatur im Fahrgastraum 7 auf einem gewünschten bzw. dem eingestellten Niveau zu halten, wird die erwärmte Luft in der Wärmetauscherkammer 4 mit Umgebungsluft gemischt bzw. die Leistung der Heizvorrichtung 10 wird reduziert.

Der Wärmespeicher 9 wird weiterhin mit in der Heizvorrichtung 10 erwärmter Luft gespeist, um den Ladezustand aufrecht zu erhalten, so lange sich das Schienenfahrzeug auf einer elektrifizierten Strecke befindet. Um den Ladezustand des Wärmespeichers 9 sowohl im Heizbetrieb als auch im Kühlbetrieb auch bei einer Mischung mit Umgebungsluft aufrecht zu erhalten, kann die Heizvorrichtung 10 und/oder Kühlvorrichtung 16 unmittelbar mit dem ersten Luftkanal 5 verbunden sein, so dass die von der Heizvorrichtung 10 und/oder Kühlvorrichtung 16 temperierte Luft ohne die Zumischung weiterer Luft zum Wärmespeicher 9 gelangen kann. Fig. 4 zeigt einen vierten Betriebsmodus der Klimatisierungseinrichtung 1, der insbesondere auf nicht elektrifizierten Strecken Anwendung findet. Nach Erfassen des zweiten Betriebszustandes, in welchem die Energieversorgung allein über die interne Energiequelle erfolgt, kann bei nicht ausreichend aufgeladenem Wärmespeicher 9 eine Reduzierung der Heiz- oder Kühlleistung erfolgen. Ist der Wärmespeicher 9 hingegen ausreichend aufgeladen, wird die Heizvorrichtung 10 und/oder Kühlvorrichtung 16 abgeschaltet. Anschließend kann die Klimatisierung des Fahrgastraums 7 teilweise oder allein durch den Wärmespeicher 9 erfolgen. Um die Temperierung des dem Fahrgastraum 7 zugeführten Luftstroms allein über den Wärmespeicher 9 vorzunehmen, sind in dem in Fig. 4 gezeigten Betriebsmodus die dritte Verschließeinrichtung 17 sowie die vierte Verschließeinrichtung 18 verschlossen. Die über den Ventilator 14 durch die Luftzuführung 3 geförderte, noch kalte Luft aus der Umgebung des Schienenfahrzeugs gelangt über die Wärmetauscherkammer 4 und den ersten Luftkanal 5 in die Wärmespeicherkammer 20 zum Wärmespeicher 9. In der Wärmespeicherkammer 20 gibt der Wärmespeicher 9 die gespeicherte Wärme an den passierenden Luftstrom ab, bis dieser eine für den Fahrgastraum 7 geeignete Temperatur erreicht hat. Anschließend gelangt die erwärmte Luft in den Fahrgastraum 7. Erst wenn die aus der Wärmespeicherkammer 20 austretende Luft eine vordefinierte Temperatur unterschreitet, wird die Klimatisierungseinrichtung 1 auch auf nicht elektrifizierter Strecke, d.h. wenn sich das Schienenfahrzeug in dem zweiten Betriebszustand befindet, eingeschaltet.

Die beschriebenen und dargestellten spezifischen Ausführungsformen sind für die Ausführung der Erfindung nicht bindend, sondern können im Rahmen der vorliegenden Erfindung geeignet modifiziert werden, ohne von dem durch die Ansprüche definierten Schutzbereich der vorliegenden Erfindung abzuweichen.

### Bezugszeichenliste

- 1: Klimatisierungseinrichtung
- 2: Luftführung
- 3: Luftzuführung
- 4: Wärmetauscherkammer
- 5: Erster Luftkanal
- 6: Zweiter Luftkanal
- 7: Fahrgastraum
- 8: Luftausgang
- 9: Wärmespeicher
- 10: Heizvorrichtung
- 11: Erste Verschließeinrichtung
- 12: Zweite Verschließeinrichtung
- 13: Strömungsrichtung
- 14: Ventilator
- 15: Strömungsrichtung
- 16: Kühlvorrichtung
- 17: Dritte Verschließeinrichtung
- 18: Vierte Verschließeinrichtung
- 19: Rückführkanal
- 20: Wärmespeicherkammer
- 21: Temperatursensor

## Patentansprüche

1. Schienenfahrzeug mit einer auf dem Fahrzeug installierten, internen Energiequelle zur Energieversorgung des Antriebs auf Streckenabschnitten ohne externe Energiequelle, mit einer Schnittstelle zur Energieversorgung des Fahrzeugs auf Streckenabschnitten mit externer Energiequelle, wobei das Schienenfahrzeug eine Klimatisierungseinrichtung (1) aufweist, wobei die Klimatisierungseinrichtung (1) eine Heizvorrichtung (10) zum Erwärmen und/oder eine Kühlvorrichtung (16) zum Kühlen eines Fahrgastraums (7) umfasst und mit einem Wärmespeicher (9) versehen ist, **dadurch gekennzeichnet, dass** der Wärmespeicher (9) wärmeübertragend mit der Heizvorrichtung (10) und/oder Kühlvorrichtung (16) verbindbar angeordnet ist, wobei die Heizvorrichtung (10) und/oder Kühlvorrichtung (16) ausgebildet ist, einen dem Fahrgastraum (7) zuführbaren Luftstroms zu erwärmen oder zu kühlen, wobei der Wärmespeicher (9) wärmeübertragend mit dem Luftstrom verbindbar angeordnet ist und ein Rückführkanal (19) vorgesehen ist, durch den ein für die Temperierung des Wärmespeichers (9) verwendete Luftstrom zurück zur Heizvorrichtung (10) und/oder Kühlvorrichtung (16) leitbar ist.

2. Schienenfahrzeug nach Anspruch 1, **dadurch gekennzeichnet, dass** der Wärmespeicher (9) ein Latentwärmespeicher ist.

3. Schienenfahrzeug nach einem der obigen Ansprüche, **dadurch gekennzeichnet, dass** die Klimatisierungseinrichtung (1) eine Luftführung (2) aufweist, die von der Heizvorrichtung (10) und/oder Kühlvorrichtung (16) zum Fahrgastraum (7) führt, wobei der Wärmespeicher (9) wärmeübertragend mit der Luftführung (2) verbunden ist.

4. Schienenfahrzeug nach Anspruch 3, **dadurch gekennzeichnet, dass** die Luftführung (2) einen ersten Luftkanal (5) und einen zweiten Luftkanal (6) umfasst, wobei der Wärmespeicher (9) an und/oder in dem ersten Luftkanal (5) angeordnet und/oder wärmeleitend mit dem ersten Luftkanal (5) verbunden ist.

5. Schienenfahrzeug nach Anspruch 4, **dadurch gekennzeichnet, dass** wenigstens eine Verschließeinrichtung (11, 12) zum Verschließen des ersten Luftkanals (5) und/oder wenigstens eine Verschließeinrichtung (17, 18) zum Verschließen des zweiten Luftkanals (6) vorgesehen ist.

6. Schienenfahrzeug nach einem der obigen Ansprüche, **dadurch gekennzeichnet, dass** die Klimatisierungseinrichtung (1) eine Steuereinrichtung aufweist, die dazu ausgebildet ist, die Leistung der Klimatisierungseinrichtung (1) unter Einbezug der Wärmeabgabe oder Wärmeaufnahme des Wärmespeichers (9) entsprechend einem Sollwert einzustellen.

7. Schienenfahrzeug nach Ansprüche 5 und 6, **dadurch gekennzeichnet, dass** die wenigstens eine Verschließeinrichtung (11, 12, 17, 18) durch die Steuereinrichtung abhängig von einer gemessenen Temperatur in dem Fahrgastraum (7), in dem Wärmespeicher (9), in der Luftführung (2) und/oder in der Umgebung des Schienenfahrzeuges betätigbar ist.

8. Schienenfahrzeug nach einem der obigen Ansprüche, **dadurch gekennzeichnet, dass** das Schienenfahrzeug zur Energieversorgung seines Antriebes und von Nebenaggregaten mit einem Akkumulator versehen ist.

9. Schienenfahrzeug nach einem der Ansprüche 6 bis 8, **dadurch gekennzeichnet, dass** die Steuereinrichtung eine Auswerteeinheit umfasst, durch welche ein erster Betriebszustand, in welchem die Energieversorgung des Schienenfahrzeuges über die externe Energiequelle erfolgt, und ein zweiter Betriebszustand, in welchem die Energieversorgung über die interne Energiequelle erfolgt, erfassbar sind.

10. Verfahren zur Klimatisierung eines Schienenfahrzeuges nach einem der obigen Ansprüche, **gekennzeichnet durch** ein gleichzeitiges Beheizen oder Kühlen des Fahrgastraums (7) und des Wärmespeichers (9) sowie die Schritte:
a. Klimatisieren des Fahrgastraums (7) durch die Heiz- und/oder Kühlvorrichtung bis zum Erreichen einer vorgegebenen Übergangstemperatur,
b. Gleichzeitiges Klimatisieren des Fahrgastraums (7) und des Wärmespeichers (9) durch die Heizvorrichtung (10) und/oder Kühlvorrichtung (16),
c. Abschalten der Heizvorrichtung (10) und/oder Kühlvorrichtung (16) und temperieren des Fahrgastraums (7) durch den Wärmespeicher (9).

11. Verfahren nach Anspruch 10, **dadurch gekennzeichnet, dass** nach Erfassen eines ersten Betriebszustandes, in welchem die Energieversorgung des Schienenfahrzeuges über die externe Energiequelle erfolgt, die Heizvorrichtung (10) und/oder Kühlvorrichtung (16) eingeschaltet werden, und nach Erfassen eines zweiten Betriebszustandes, in welchem die Energieversorgung über die interne Energiequelle erfolgt, die Heizvorrichtung (10) und/oder Kühlvorrichtung (16) ausgeschaltet werden.

## Claims

1. A rail vehicle with an internal energy source installed on the vehicle for supplying energy to the drive on track sections without an external energy source, with an interface for supplying energy to the vehicle on track sections with an external energy source, wherein the rail vehicle comprises an air-conditioning device (1), wherein the air-conditioning device (1) comprises a heating device (10) for heating and/or a cooling device (16) for cooling a passenger compartment (7), and wherein the is provided with a heat accumulator (9), **characterized in in that** the heat accumulator (9) is arranged such that it can be connected in a heat-transferring manner to the heating device (10) and/or cooling device (16), wherein the heating device (10) and/or cooling device (16) is configured to heat or cool an air stream which can be supplied to the passenger compartment (7), wherein the heat accumulator (9) being arranged such that it can be connected to the air stream in a heat-transferring manner, and wherein a return duct (19) being provided through which an air stream used for tempering the heat accumulator (9) can be routed back to the heating device (10) and/or cooling device (16).

2. The rail vehicle according to claim 1, **characterized in that** the heat accumulator (9) is a latent heat accumulator.

3. The rail vehicle according to one of the above claims, **characterized in that** the air-conditioning device (1) comprises an air duct (2) which leads from the heating device (10) and/or cooling device (16) to the passenger compartment (7), wherein the heat accumulator (9) is connected to the air duct (2) in a heat-transferring manner.

4. The rail vehicle according to claim 3, **characterized in that** the air duct (2) comprises a first air duct (5) and a second air duct (6), wherein the heat accumulator (9) is arranged on and/or in the first air duct (5) and/or is connected to the first air duct (5) in a heat-conducting manner.

5. The rail vehicle according to claim 4, **characterized in that** at least one closing device (11, 12) for closing the first air duct (5) and/or at least one closing device (17, 18) for closing the second air duct (6) is provided.

6. The rail vehicle according to claims 5 and 6, **characterized in that** the air-conditioning device (1) comprises a control device which is configured to set the output of the air-conditioning device (1) in accordance with a setpoint value, taking into account the heat dissipation or heat absorption of the heat accumulator (9).

7. The rail vehicle according to claim 6, **characterized in that** the at least one closing device (11, 12, 17, 18) can be actuated by the control device depending on a measured temperature in the passenger compartment (7), in the heat accumulator (9), in the air duct (2) and/or in the environment of the rail vehicle.

8. The rail vehicle according to one of the above claims, **characterized in that** the rail vehicle is provided with an accumulator for supplying energy to its drive and to auxiliary aggregates.

9. The rail vehicle according to one of claims 6 to 8, **characterized in that** the control device comprises an evaluation unit by means of which a first operating state, in which the rail vehicle is supplied with energy via the external energy source, and a second operating state, in which the energy is supplied via the internal energy source, can be detected.

10. A method for air-conditioning a rail vehicle according to one of the above claims, **characterized by** a simultaneous heating or cooling of the passenger compartment (7) und the heat accumulator (9), and the steps:
a. air conditioning the passenger compartment (7) by the heating and/or cooling device until a predetermined transition temperature is reached,
b. simultaneously air conditioning the passenger compartment (7) and the heat accumulator (9) by the heating device (10) and/or cooling device (16),
c. switching off the heating device (10) and/or cooling device (16) and tempering the passenger compartment (7) by the heat accumulator (9).

11. The method according to claim 10, **characterized in that** the heating device (10) and/or cooling device (16) are switched on after detection of a first operating state in which the rail vehicle is supplied with energy via the external energy source, and **in that** the heating device (10) and/or cooling device (16) are switched off after detection of a second operating state in which the energy is supplied via the internal energy source.

## Revendications

1. Véhicule ferroviaire avec une source d'énergie interne installée sur le véhicule pour l'alimentation en énergie de l'entraînement sur des tronçons de ligne sans source d'énergie externe, avec une interface pour l'alimentation en énergie du véhicule sur des tronçons de ligne avec une source d'énergie externe, le véhicule ferroviaire présentant un dispositif de climatisation (1), le dispositif de climatisation (1) comprenant un dispositif de chauffage (10) pour chauffer et/ou un dispositif de refroidissement (16) pour refroidir un habitacle (7) et étant pourvu d'un accumulateur de chaleur (9), **caractérisé en ce que en ce que** l'accumulateur de chaleur (9) est disposé de manière à pouvoir être relié, en transmettant de la chaleur, au dispositif de chauffage (10) et/ou au dispositif de refroidissement (16), le dispositif de chauffage (10) et/ou le dispositif de refroidissement (16) étant conçu pour chauffer ou refroidir un flux d'air pouvant être amené à l'habitacle (7), l'accumulateur de chaleur (9) étant disposé de manière à pouvoir être relié au flux d'air de manière à transmettre de la chaleur, un conduit de retour (19) étant prévu, par lequel un flux d'air utilisé pour tempérer l'accumulateur de chaleur (9) peut être ramené au dispositif de chauffage (10) et/ou au dispositif de refroidissement (16).

2. Véhicule ferroviaire selon la revendication 1, **caractérisé en ce que** l'accumulateur de chaleur (9) est un accumulateur de chaleur latente.

3. Véhicule ferroviaire selon l'une des revendications précédentes, **caractérisé en ce que** le dispositif de climatisation (1) présente un conduit d'air (2) qui mène du dispositif de chauffage (10) et/ou du dispositif de refroidissement (16) à l'habitacle (7), l'accumulateur de chaleur (9) étant relié au conduit d'air (2) de manière à transmettre la chaleur.

4. Véhicule ferroviaire selon la revendication 3, **caractérisé en ce que** le conduit d'air (2) comprend un premier canal d'air (5) et un deuxième canal d'air (6), l'accumulateur de chaleur (9) étant disposé sur et/ou dans le premier canal d'air (5) et/ou étant relié au premier canal d'air (5) de manière à conduire la chaleur.

5. Véhicule ferroviaire selon la revendication 4, **caractérisé en ce qu'**il est prévu au moins un dispositif de fermeture (11, 12) pour fermer le premier canal d'air (5) et/ou au moins un dispositif de fermeture (17, 18) pour fermer le deuxième canal d'air (6).

6. Véhicule ferroviaire selon l'une des revendications précédentes, **caractérisé en ce que** le dispositif de climatisation (1) présente un dispositif de commande qui est conçu pour régler la puissance du dispositif de climatisation (1) en tenant compte de la dissipation ou de l'absorption de chaleur de l'accumulateur de chaleur (9) en fonction d'une valeur de consigne.

7. Véhicule ferroviaire selon les revendications 5 et 6, **caractérisé en ce que** l'au moins un dispositif de fermeture (11, 12, 17, 18) peut être actionné par le dispositif de commande en fonction d'une température mesurée dans l'habitacle (7), dans l'accumulateur de chaleur (9), dans le conduit d'air (2) et/ou dans l'environnement du véhicule ferroviaire.

8. Véhicule ferroviaire selon l'une des revendications précédentes, **caractérisé en ce que** le véhicule ferroviaire est muni d'un accumulateur pour l'alimentation en énergie de son entraînement et des unités auxiliaires.

9. Véhicule ferroviaire selon l'une des revendications 6 à 8, **caractérisé en ce que** le dispositif de commande comprend une unité d'évaluation au moyen de laquelle un premier état de fonctionnement, dans lequel l'alimentation en énergie du véhicule ferroviaire s'effectue via la source d'énergie externe, et un deuxième état de fonctionnement, dans lequel l'alimentation en énergie s'effectue via la source d'énergie interne, peuvent être saisis.

10. Procédé de climatisation d'un véhicule ferroviaire selon l'une des revendications précédentes, **caractérisé par** le chauffage ou le refroidissement simultané de l'habitacle (7) et de l'accumulateur de chaleur (9) et par les étapes :
a. climatisation de l'habitacle (7) par le dispositif de chauffage et/ou de refroidissement jusqu'à ce qu'une température de transition prédéterminée soit atteinte,
b. climatisation simultanée de l'habitacle (7) et de l'accumulateur de chaleur (9) par le dispositif de chauffage (10) et/ou le dispositif de refroidissement (16),
c. arrêt du dispositif de chauffage (10) et/ou du dispositif de refroidissement (16) et mise en température de l'habitacle (7) par l'accumulateur de chaleur (9).

11. Procédé selon la revendication 10, **caractérisé en ce qu'**après la détection d'un premier état de fonctionnement, dans lequel l'alimentation en énergie du véhicule ferroviaire a lieu via la source d'énergie externe, le dispositif de chauffage (10) et/ou le dispositif de refroidissement (16) sont mis en marche, et après la détection d'un deuxième état de fonctionnement, dans lequel l'alimentation en énergie a lieu via la source d'énergie interne, le dispositif de chauffage (10) et/ou le dispositif de refroidissement (16) sont mis hors tension.
